# EUROPÄISCHE PATENTANMELDUNG

(11) **EP 0 610 950 A2**
(43) Veröffentlichungstag der Anmeldung: **17.08.1994**
(21) Anmeldenummer: 94102156.0
(22) Anmeldetag: 11.02.1994
(51) Int. Cl.: H04J 3/04

(54) **Schaltungsanordnung zur Nachrichtenübertragung**

(30) Priorität: 12.02.1993 DE 4304279
(71) Anmelder: SIEMENS AKTIENGESELLSCHAFT, D-80333 München (DE)
(72) Erfinder: Schiess, Peter, D-82024 Taufkirchen (DE); Hübner, Franz R., D-82024 Taufkirchen (DE)

(57) **Zusammenfassung**

Schaltungsanordnung zur Nachrichtenübertragung mit einem Multiplexer (1), mit dessen Hilfe Ausgangssignale einer Sendevorrichtung (3, 4) in einen Signalrahmen einblendbar sind. Um während einer Einstellroutine eine unkontrollierte Einblendung von Störsignalen zu vermeiden, sind einem Datensignal-und/oder Einblendsteuersignaleingang des Multiplexers sperrbare Trennstufen vorgeschaltet. Die Vorrichtung läßt sich insbesondere in Digitalsignal-Übertragungseinrichtungen verwenden.

## Beschreibung

Die Erfindung bezieht sich auf eine wie im Oberbegriff des Patentanspruchs 1 angegebene Schaltungsanordnung zur Nachrichtenübertragung.

Mit Hilfe einer derartigen Schaltungsanordnung lassen sich Digitalsignale in freien Zeitschlitzen eines Übertragungsrahmens von einer Betriebsstelle zu einer weiteren Betriebsstelle einer Nachrichten-Übertragungseinrichtung übertragen. Dabei fügen eine oder mehrere gleichzeitig in Betrieb befindliche Sendevorrichtungen zu übertragende Datensignale in vorgegebene Zeitschlitze des Rahmens ein. Ein oder mehrere Empfänger filtern am Empfangsort die Datensignale aus den sie betreffenden Zeitschlitzen aus. Der Übertragungsrahmen ist durch das verwendete Übertragungssystem vorgegeben und kann bei Übertragungssystemen der synchronen digitalen Hierarchie ein Abschnitts-Rahmenkopf (Section-Overhead) oder bei einem PCM-Übertragungssystem eine andere übliche festgelegte Rahmenstruktur sein.

Übertragungssysteme der synchronen digitalen Hierarchie sind z.B. aus der DE-Z/NTZ Band 41 (1988) Heft 10, Seiten 570 bis 584 bekannt.

Bei einer Einblendung von Digitalsignalen in freie Zeitschliltze dürfen die Sendevorrichtungen nur gewünschte Signale und diese nur während des für sie vorgesehenen Zeitschlitzes in den von der Übertragungseinrichtung übertragenen Bitstrom einfügen. Signale in anderen Zeitlagen würden die Signalübertragung stören und zu Bitfehlern führen. Dies gilt auch beim Einschalten einzelner Sendevorrichtungen in einem in Betrieb befindlichen Übertragungssystem, insbesondere beim Stecken von Baugruppen, die eine oder mehrere solcher Sendevorrichtungen enthalten.

Auf Baugruppen mit Mikroprozessor-Anschluß zur Steuerung und Konfigurierung von einem oder mehreren ASICs mit zusammen hunderttausend und mehr Basiszellen ist nicht ohne weiteres zu überblicken, was sich während des Hochlaufs der Stromversorgung, der Testphase des Mikroprozessors und während der Konfigurierung in der integrierten Schaltung im Detail abspielt. Die Folge können unkontrollierte Störsignale sein, die in den Signal- bzw. Übertragungsrahmen eingeblendet werden.

Aufgabe der Erfindung ist es daher, die Schaltungsanordnung zur Nachrichtenübertragung derart auszubilden, daß eine unkontrollierte Einblendung von Störsignalen in den Signalrahmen wirksam verhindert ist.

Gemäß der Erfindung wird die Schaltungsanordnung zur Lösung dieser Aufgabe in der im kennzeichnenden Teil des Patentanspruchs 1 angegebenen Weise ausgebildet.

Dabei ist in der Vorrichtung zur Digitalsignal-Verarbeitung für den Datensignalausgang und/oder für das Einblendsteuersignal jeweils eine Trennstufe mit einem Ausgang nach Art eines offenen Kollektorausgangs vorgesehen. Die Trennstufe ist jeweils solange gesperrt und somit an ihrem Ausgang hochohmig, bis nach Hochlauf der Stromversorgung alle Mikroprozessor-Tests sowie alle Konfigurierungseinstellungen getätigt sind. Im Laufe der Mikroprozessor-Einstellungen, insbesondere als letztes, werden schließlich durch Belegen eines entsprechenden Speicherplatzes in einem Register, RAM oder dergleichen die Trennstufen entriegelt.

Durch diese Maßnahmen ergibt sich der Vorteil, daß Baugruppen mit Sendevorrichtungen für Digitalsignale, die in einem Signalrahmen einblendbar sind, gesteckt oder eingeschaltet werden können, ohne daß dies mit einer unkontrollierten Einblendung von Störsignalen in den Signalrahmen führt.

Vorteilhafte Ausgestaltungen der Erfindung ergeben sich aus den Ansprüchen 2 bis 8.

Die Weiterbildung nach Anspruch 2 hat den Vorteil, daß sich die dabei vorgesehenen zusätzlichen Schaltmittel in eine integrierte Schaltung einbeziehen lassen, die als Vorrichtung zur Digitalsignal-Verarbeitung dient.

Das Rücksetzen des Registers in eine Grundeinstellung erfolgt insbesondere durch ein beim Hochlaufen der Stromversorgung erzeugtes Rücksetzsignal.

Bei den Ausführungsformen nach den Ansprüchen 4 und 5 erhalten die Steuereingänge der Trennstufen zunächst Sperrpotential, das nach Ablauf der Einstellroutine durch Einschaltpotential überschrieben wird.

Die Erfindung wird anhand der in den Figuren dargestellten Ausführungsbeispiele und Impulsdiagramme näher erläutert.

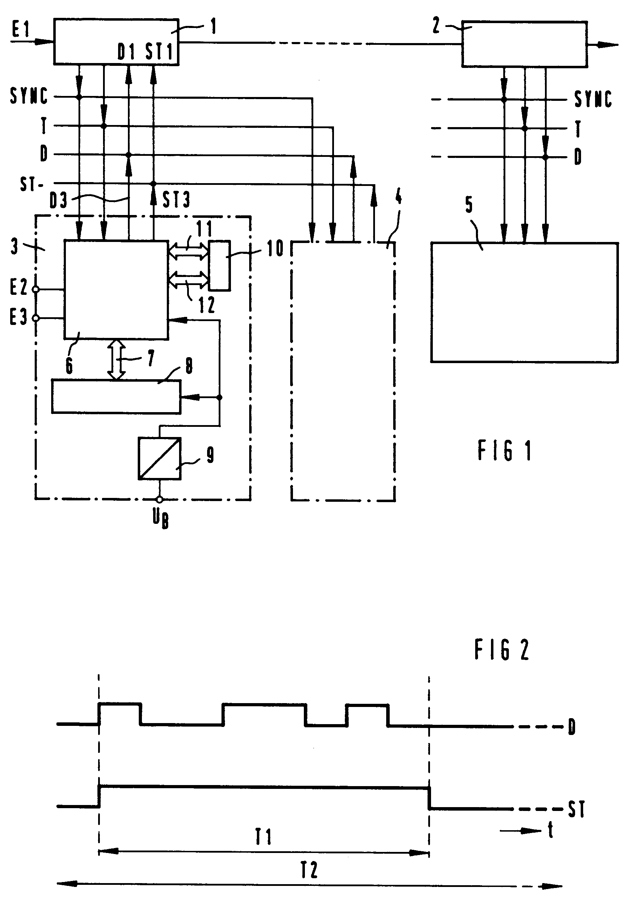

Es zeigen
- Fig. 1: eine Schaltungsanordnung mit einem Multiplexer und mit Sendevorrichtungen zur Einblendung von Datensignalen in einen Übertragungsrahmen,
- Fig. 2: für die Schaltungsanordnung nach Fig. 1 den zeitlichen Verlauf von einzublendenden Datensignalen und eines zugehörigen Einblendsteuersignals,
- Fig. 3: eine Schaltungsanordnung zur Einblendung von Datensignalen mit in einem IC enthaltenen, dem Multiplexer vorgeschalteten Trennstufen und
- Fig. 4: eine Schaltungsanordnung zur Einblendung von Datensignalen mit zwischen einem IC und dem Multiplexer angeordneten Trennstufen und
Bei der Schaltungsanordnung nach Fig. 1 sind die Sendevorrichtungen 3 und 4 jeweils als eigene Baueinheit, insbesondere als Baugruppe eines in eine gestellartige Aufnahmevorrichtung einsetzbaren Einsatzes ausgebildet. Die Sendevorrichtungen 3 und 4 sind gleichartig aufgebaut. Die von der Sendevorrichtung abgegebenen Digitalsignale werden mit Hilfe des Multiplexers 1 in den Ubertragungsrahmen eingeblendet, der durch das verwendete Übertragungssystem vorgegeben ist. Ist der Multiplexer 1 Teil einer Nachrichtenübertragungseinrichtung der Synchronen Digitalen Hierarchie, so werden die mittels der Sendevorrichtungen 3 und/oder 4 einzufügenden Digitalsignale insbesondere in den Abschnitts-Rahmenkopf (Section Overhead) des Übertragungsrahmens eingeblendet.

Die Sendevorrichtung 3 verarbeitet ankommende Datensignale und multiplext diese im Zusammenwirken mit dem Multiplexer 1 in vorgegebene Zeitschlitze des Übertragungs-Rahmens. Die Vorrichtung 61 und das Miktroprozessor-System 8, die über den Bus 7 miteinander verbunden sind, werden mit Hilfe des Umrichters 9 mit Speisespannung versorgt.

In der Firmware des an die Vorrichtung 3 zur Digitalsignal-Verarbeitung angeschlossenen Festspeichers 10 sind die Bitrate der Datensignale und Informationen darüber gespeichert, in welche Zeitschlitze des vorgegebenen Rahmens die zu übertragenden Datensignale eingeblendet werden sollen. Als Festspeicher 10 können insbesondere EPROMs und/oder PROMs Verwendung finden.

Die Vorrichtung 3 zur Digitalsignal-Verarbeitung erhält vom Festspeicher 10 laufend die Information, ob in dem jeweils anstehenden Zeitschlitz ein Datensignal eingeblendet werden soll oder nicht. Sollen Daten in einen Zeitschlitz des Rahmens eingeschrieben werden, so wird das Einblend-Steuersignal selektiv auf Log.-Pegel "H" geschaltet.

Das Einblenden von Signalen, die den Signaleingängen E2 und E3 der Vorrichtung 63 zugeführt werden in die entsprechenden Zeitschlitze des Rahmens erfolgt rahmensynchron. Zur Steuerung des Einblendens wird entsprechend Fig. 2 ein das Datensignal begleitendes, selektives Steuersignal, zeitgleich mit dem Zeitschlitz im Rahmen, übertragen.

Fig. 2 zeigt ein Impulsdiagramm für die Signale, die auf der Datenleitung D und auf der Steuersignalleitung ST von der Sendevorrichtung 3 zum Multiplexer 1 übertragen werden.

Im Festspeicher 10 sind als Firmware mehrere verschiedene Programme gespeichert. Die Auswahl des jeweiligen Firmware-Programms erfolgt über die Mikroprozessor-Funktionseinheit mittels Ansteuerung über Adressleitungen.

Ohne besondere Vorkehrungen könnten während des Hochlaufens der Stromversorgung die Adressleitungen unkontrollierte Logik-Zustände annehmen und so unter Umständen bewirken, daß ein falsches Firmware-Programm angesprochen wird und hierdurch zeitlich von der Sendevorrichtung 3 falsche Einblend-Steuersignale abgegeben werden.

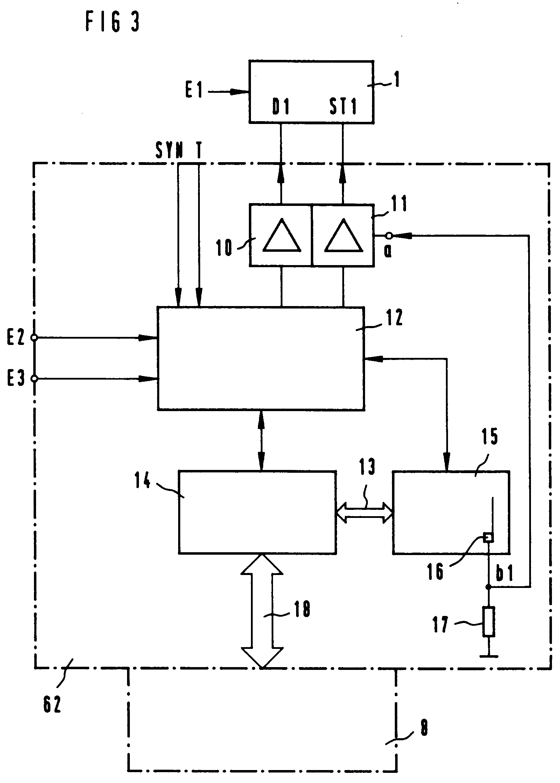

Bei der Schaltungsanordnung nach Fig. 3 ist die Sendevorrichtung 62 als integrierte Schaltung ausgebildet, die die Trennstufen 10 und 11 enthält. Die Sendevorrichtung 62 enthält ferner die Anordnung 12 zur Digitalsignal-Verarbeitung, der über die Signaleingänge E2 und E2 die in den Übertragungsrahmen einzublendenden Signale zugeführt werden. Die Anordnung 12 zur Digitalsignal-Verarbeitung wird über den Eingang T mit einem Takt und über den Eingang SYN mit Synchronpulsen gesteuert und ist sowohl mit der Peripherieeinheit 14 als auch mit dem Register 15 verbunden. Die Peripherieeinheit 14 bildet einen Mikroprozessoranschluß, der über den Bus 13 mit dem Register 15 und den Bus 18 mit dem Mikroprozessor-System bzw. externen Mikroprozessor-Funktionsteil 8 verbunden ist. Dem Ausgang für das Datensignal ist die Trennstufe 10, dem Ausgang für das Einblend-Steuer-Signal die Trennstufe 11 vorgeschaltet. Die Trennstufen 10 und 11 haben den gemeinsamen Steuereingang a. Liegt am Steuereingang a Logik-Pegel "L" an, so sind die Trennstufen 10 und 11 gesperrt und an ihrem Ausgang hochohmig. Logik-Pegel "H" am Steuereingang a bewirkt, daß die Trennstufen 10 und 11 von der Funktionseinheit 12 empfangene Signale an den Multiplexer 1 weitergeben.

Das dem Steuereingang a zugeführte Steuersignal kommt aus dem in der integrierten Schaltung 62 enthaltenen Register 15. Dabei ist der Steuereinang a unmittelbar an den Ausgang der Zelle 16 des Registers 15 angeschlossen. Der Ausgang dieser Zelle 16 ist außerdem über den Ziehwiderstand 17 an Bezugspotential geführt, das dem Logik-Pegel "L" entspricht. Der Steuereingang a hat im stromlosen Zustand der Schaltungsanordnung und solange die Zelle 16 des Registers 15 nicht auf den Logik-Pegel "H" gesetzt wird, über den Ziehwiderstand 17 den Logig-Pegel "L".

Nach Hochlaufen der Vorrichtung 9 zur Stromversorgung nach Fig. 1 sowie nach den internen Selbsttests der Mikroprozessor-Funktionseinheit 8 und nach dem Konfigurieren der integrierten Schaltung 62 sowie weiterer auf der Baugruppe befindlicher ASICs und ICs wird als letztes das Steuer-Bit in der Zelle 16 des Registers 15 auf den Logik-Pegel "H" gesetzt und damit die Sperrung der Trennstufen 10 und 11 aufgehoben.

Werden bei der Konfigurierung des Registerinhaltes die wortweise organisierten Zellen des Registers 15 wortweise geladen, so ist die Zelle, deren Ausgang an den Steuereingang a geführt ist, die zum letzten Bit des letzten Wortes gehörende Zelle. Andererseits kann man eine beliebige Zelle im Register 15 wählen. Die zur Konfigurierung des Registerinhaltes dienende Steuersoftware ist dabei so auszulegen, daß die maßgebliche Zelle als zeitlich letzte oder zu einem Zeitpunkt gesetzt wird, nach dem keine Störsignale mehr an die Eingänge der Trennstufen 10 und 11 gelangen können.

Es kann sich ferner als zweckmäßig erweisen, mittels der Steuersoftware das Steuerbit verzögert, insbesondere in einem folgenden Polling-Zyklus zu stzen. Auf diese Weise können zeitlich länger währende Abläufe wie Synchronisierung oder dergleichen in der integrierten Schaltung 62 bzw. in anderen Funktionstests der Baugruppe abgewartet werden.

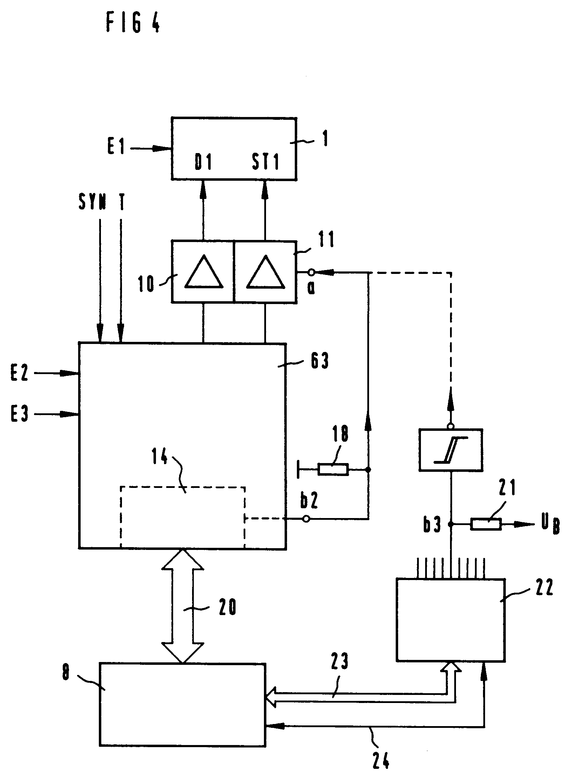

Fig. 4 zeigt eine Schaltungsanordnung, bei der anstelle der anhand von Fig. 3 beschriebenen, in der integrierten Schaltung 62 enthaltenenen Trennstufen 10 und 11 auf der Baugruppe diskrete, durch Tristate-Buffer gebildete Trennstufen 10 und 11 zwischen der Funktionseinheit 63 und dem Dateneingang D1 und dem Steuereingang ST1 des Multiplexers 1 angeodnet sind. Der Steuereingang a ist in diesem Fall an den Steuerausgang b2 der Vorrichtung 63 zur Digitalsignal-Verarbeitung angeschlossen. Der Steuerausgang b2 wird mit einem Steuersignal aus dem Mikroprozessor-Funktionsteil bzw. Mikroprozessor-Anschluß 14 bedient.

Die Sperrung und die Aufhebung der Sperrung der Trennstufen 10 und 11 erfolgt wie anhand der Fig. 3 beschrieben.

Die Steuerung der Trennstufen 10 und 11 kann alternativ über das PIOP 22 (Programable Peripheral Input Output Port), das über den Bus 23 an den Mikroprozessor-Funktionsteil 8 angeschlossen ist, erfolgen. Der Mikroprozessor-Funktionsteil 8 ist dabei über den Bus 23 mit dem PIOP 22 und über den Bus 20 mit dem Mikroprozessor-Anschluß 14 verbunden.

Die Sperrung und die Aufhebung der Sperrung der Trennstufen 10 und 11 erfolgt auch in diesem Fall wie anhand der Fig. 3 beschrieben.

Das PIOP 22 ist mit einem seiner Anschlüsse b3 an den Steuereingang a der Trennstufen 10 und 11 geführt. Der Anschluß b3 liegt ferner über den Ziehwiderstand 21 an Masse. Das PIOP 22 wird mit Hilfe des Mikroprozessor-Funktionsteils 8 gesteuert. Das PIOP 22 hat eine vorgegebene Zahl von Eingängen oder Ausgängen, die über den Mikroprozessor-Funktionsteil 8 programmiert werden können. Die Peripherie-Schnittstelle, zu der der Anschluß b3 gehört, kann somit Eingang oder Ausgang sein. Ist er als Eingang programmiert, ist er hochohmig.

Der Mikroprozessor stellt an sich auch Ein- und Ausgänge wie der PIOP 22 zur Verfügung. Die Zahl dieser Ein- und Ausgänge ist jedoch begrenzt. Aus diesem Grund ist das externe PIOP 22 vorgesehen, um eine größere Zahl Ein- und Ausgänge zur Verfügung zu stellen. Der Anschluß b3 des PIOP ist über den Ziehwiderstand 21 an Masse bzw. Sperrpotential geführt. Ausgehend von einem Anfangszustand mit Logikpegel "H", in dem der Anschluß als Eingang konfiguriert ist, wird er erst zu einem Zeitpunkt als Ausgang konfiguriert, bei dem eine störungsfreie Signaleinblendung gewährleistet ist.

Der Mikroprozessor-Funktionsteil 8 enthält u.a. ein RAM. Das RAM bildet den Speicher, in den das Steuerbit einschreibbar ist. Dem Ausgang b2 des Mikroprozessor-Anschlußteils 14 ist dem Steuerbit zugeordnet und über den Ziehwiderstand 18 an Masse geführt, das ein Sperrpotential für die Trennstufen 10 und 11 bildet. Der Anschlußteil 14 ist neben anderem mit einer Anfangsfunktion nach Art eines PIOP ausgebildet, so daß der Anschluß b2 als entsprechender Ausgang ausgebildet ist.

Das Steuerbit, das die Trennstufen freigibt, kann andererseits, ausgehend von einer vorgegebenen zeitlichen Lage der bei der Inbetriebnahme der Sendevorrichtung vorgesehenen Einstellroutine mit vorgegebener Verzögerung gesetzt werden. Die Verzögerung ist insbesondere derart bemessen, daß nach Ablauf der Verzögerung die Synchronisierung der Sendevorrichtung mit dem Multiplexer mit Sicherheit gewährleistet ist.

Mit dem Stecken der Baugruppe beginnt der Hochlauf der Stromversorgung. Ein Rücksetz-Impuls, der vom Mikroprozessor-Funktionsteil 8 über die Leitung 24 an den PIOP 22 abgegeben wird, bewirkt im Rücksetzen (Power-On-Reset) des PIOPs und damit "H"-Pegel an allen Peripherie-Anschlüssen der IO-Ports. Über den Widerstand 21 wird der PIOP-Ausgang sicher nach "H" gezogen. Am Ausgang des invertierenden Schmitt-Triggers 23, der zwischen PIOP 22 und Steuereingang a der Trennstufen 10 und 11 angeordnet ist, ergibt sich Logikpegel "L". Auf diese Weise ist sichergestellt, daß die Ausgangs-Buffer zunächst gesperrt sind. Schließlich ist der Hochlauf der Stromversorgung abgeschlossen. Darauf folgt der Eigentest des Mikroprozessor-Systems, dann die Grundeinstellung der verschiedenen Register von ASICs und PIOP sowie die Mode-Einstellung des PIOPs. Darauf erfolgt das Setzen des betreffenden Steuerbits zur Freigabe der Ausgangs-Trennstufen. Mit der Freigabe der Ausgangs-Trennstufen beginnt der normale Betriebszustand der Sendevorrichtung. Dabei wird - jeweils im entsprechenden Zeitschlitz - ein Datensignal an den Multiplexer gesendet.

Bei einem Aktiv-Logik-Pegel "H" des Ausgangs-Buffers arbeitet die Schaltungsanordnung mit den umgekehrten Logik-Pegeln.

## Patentansprüche

1. Schaltungsanordnung zur Nachrichtenübertragung mit einem Multiplexer (1) und mit wenigstens einer Sendevorrichtung (3, 4), die eine durch ein Mikroprozessorsystem (8) steuerbare Vorrichtung (61, 62, 63) zur Digitalsignal -Verarbeitung enthält, wobei ein Datenausgang (D3) und ein Einblendsteuersignalausgang (ST3) der Vorrichtung (61, 62, 63) zur Digitalsignal-Verarbeitung an einen Dateneingang (D1) und einen Einblendsteuersignaleingang (ST1) des Multiplexers (1) geführt sind, die Vorrichtung zur Digitalsignal-Verarbeitung (61, 62, 63) über eine Taktleitung (T) und eine Synchronsignalleitung (Sync) an den Multiplexer (1) angeschlossen ist und mit Hilfe des Multiplexers (1) Ausgangssignale der Sendevorrichtung (3, 4) jeweils in einen durch das Einblendsteuersignal vorgegebenen Zeitschlitz (T1) eines Signalrahmens (T2) einblendbar sind,
**dadurch gekennzeichnet,**
dem Einblendsteuersignaleingang (ST1) und/oder dem Datensignaleingang (D1) des Multiplexers (1) jeweils eine Trennstufe (10, 11) vorgeschaltet ist, deren Ausgang wahlweise einen ersten oder zweiten Logikpegel abgeben oder einen hochohmigen Zustand annehmen kann und deren Steuereingang (a) an einen Steuerausgang (b1 ... b3) des Mikroprozessorsystems (8, 13, 14, 15) angeschlossen ist, und daß das Mikroprozessorsystem (8, 13, 14, 15) einen Speicher (15,) enthält, in den im Laufe einer bei der Inbetriebnahme der Sendevorrichtung (3) vorgesehenen Einstellroutine Informationen eingeschrieben werden und daß der Steuerausgang (b1 ... b3) zu einem Zeitpunkt durch ein als Steuerbit dienendes Bit der gespeicherten Information in einen die Trennstufe (10, 11) freigebenden Zustand überführbar ist, bei dem eine störungsfreie Signaleinblendung gewährleistet ist.

2. Schaltungsanordnung nach Anspruch 1,
**dadurch gekennzeichnet,**
daß der Speicher, in den das Steuerbit einschreibbar ist, durch ein Register (15) gebildet ist, das je zu speicherndem Bit eine Speicherzelle enthält und bei Inbetriebnahme der Sendevorrichtung (62) in eine Grundeinstellung rücksetzbar ist, und daß der Ausgang der für das Steuerbit vorgesehenen Speicherzelle (16) an den Steuereingang (a) geführt ist.

3. Schaltungsanordnung nach Anspruch 1 oder 2,
**dadurch gekennzeichnet,**
daß in der Einstellroutine das Steuerbit das zeitlich letzte Bit der das Register (15) setztenden Bits ist.

4. Schaltungsanordnung nach Anspruch 1,
**dadurch gekennzeichnet,**
daß der Speicher, in den das Steuerbit einschreibbar ist, durch ein RAM (24) gebildet ist, und daß das Mikroprozessorsystem ein PIOP (22) enthält und daß ein dem Steuerbit zugeordneter, als Ausgang konfigurierbarer Anschluß des PIOP (22) über einen Ziehwiderstand (21) an Sperrpotential (Masse) geführt ist und ausgehend von einem hochohmigen Anfangszustand erst zu einem Zeitpunkt als Ausgang konfigurierbar ist, bei dem eine störungsfreie Signaleinblendung gewährleistet ist.

5. Schaltungsanordnung nach Anspruch 1,
**dadurch gekennzeichnet,**
daß der Speicher, in den das Steuerbit einschreibbar ist, durch ein RAM (24) gebildet ist, und daß die Vorrichtung zur Digitalsignal-Verarbeitung (63) einen Anschlußteil (14) enthält und ein Ausgang (b2) des Anschlußteils (14) dem Steuerbit zugeordnet und über einen Ziehwiderstand (18) an Sperrpotential (Masse) geführt ist, und daß der Anschlußteil (14) ausgehend von einem hochohmigen Anfangszustand erst zu einem Zeitpunkt als Ausgang aktiviert wird, bei dem eine störungsfreie Signaleinblendung gewahrleistet ist.

6. Schaltungsanordnung nach Anspruch 1,
**dadurch gekennzeichnet,**
daß das Steuerbit ausgehend von einer vorgegebenen zeitlichen Lage der bei der Inbetriebnahme der Sendevorrichtung (3, 4) vorgesehenen Einstellroutine mit vorgegebener Verzögerung gesetzt wird.

7. Schaltungsanordnung nach Anspruch 6,
**dadurch gekennzeichnet,**
daß die Verzögerung derart bemessen ist, daß nach Ablauf der Verzögerung die Synchronisierung der Sendevorrichtung (3, 4) mit dem Multiplexer (1) mit Sicherheit gewährleistet ist.

8. Schaltungsanordnung nach einem der Ansprüche 1 bis 4,
**dadurch gekennzeichnet,**
daß die Trennstufen (10, 11) durch diskrete Buffer gebildet sind.
